# FASCICULE DE BREVET EUROPEEN

(11) **EP 1 934 511 B1**
(45) Date de publication et mention de la délivrance du brevet: **04.05.2011**
(21) Numéro de dépôt: 06808122.3
(22) Date de dépôt: 13.09.2006
(51) Int. Cl.: F16L 37/22, F16L 37/23, F16L 37/42

(54) **RACCORD RAPIDE DE SECURITE POUR LA JONCTION DE DEUX CANALISATIONS**
SICHERHEITS-SCHNELLANSCHLUSS-KUPPLUNG FÜR DAS ZUSAMMENBAUEN VON ZWEI ROHREN
SAFETY QUICK-CONNECT COUPLING FOR ASSEMBLING TWO PIPES

(30) Priorité: 14.09.2005 FR 0509384
(43) Date de publication de la demande: 25.06.2008
(73) Titulaire: STAUBLI FAVERGES, 74210 FAVERGES (FR)
(72) Inventeur: CHAMBAUD, Antoine, F-74210 Giez (FR); TIBERGHIEN, Alain-Christophe, F-74320 Sevrier (FR)
(74) Mandataire: Myon, Gérard Jean-Pierre
(86) Numéro de dépôt international: PCT/FR2006/002096
(87) Numéro de publication internationale: WO 2007/031643

(56) Documents cités:
- EP-A- 1 006 308
- EP-A- 1 298 378
- EP-A- 1 304 522
- US-A- 4 366 945
- US-A- 5 290 009

## Description

La présente invention a trait à un raccord rapide de sécurité pour la jonction amovible de deux canalisations parcourues par un fluide sous pression.

Un tel raccord rapide comprend classiquement un élément mâle et un élément femelle aptes à s'emmancher l'un à l'intérieur de l'autre. L'élément femelle est généralement raccordé à une canalisation amont et est pourvu d'un clapet d'obturation que l'élément mâle manoeuvre vers une position ouverte lorsqu'il est enfoncé dans l'élément femelle. L'élément mâle est généralement raccordé à une canalisation aval.

Il est connu de EP-A-1 006 308 d'utiliser un mécanisme de retenue transitoire de l'élément mâle dans l'élément femelle pour éviter que, lors de la déconnexion, l'élément mâle ne soit expulsé avec violence hors de l'élément femelle du fait de la pression résiduelle du fluide dans la canalisation aval. Le mécanisme de retenue transitoire de l'élément, mâle dans l'élément femelle est conçu de manière à ne pouvoir libérer l'élément mâle totalement qu'après avoir été placé temporairement dans une position dans laquelle la canalisation aval se purge par le raccord.

Toutefois, dans ce dispositif connu, la dissociation du raccord requiert deux manoeuvres manuelles d'un fourreau extérieur pour passer successivement de la configuration emmanchée à la configuration de retenue transitoire, puis de la configuration de retenue transitoire à la configuration dissociée. Ces manoeuvres successives imposent à l'opérateur d'attendre entre les deux actions.

C'est à cet inconvénient qu'entend plus particulièrement remédier l'invention en proposant un raccord rapide pour lequel une seule manoeuvre par l'utilisateur est nécessaire pour passer de la configuration emmanchée à la configuration de retenue, puis à la configuration dissociée.

Dans cet esprit, l'invention concerne un raccord rapide de sécurité pour la jonction amovible de deux canalisations amont et aval parcourues par un fluide sous pression, ce raccord comprenant un élément mâle et un élément femelle aptes à s'emmancher axialement et à se verrouiller l'un à l'intérieur de l'autre, un mécanisme de verrouillage apte à immobiliser axialement l'élément mâle dans une position de raccordement, un mécanisme de retenue transitoire apte à immobiliser l'élément mâle, après sa libération par le mécanisme de verrouillage, dans une position de purge de la canalisation reliée à l'élément mâle, le mécanisme de verrouillage étant commandé par un fourreau de manoeuvre coulissant autour d'un corps de l'élément femelle. Ce raccord est caractérisé en ce que lorsqu'il retient l'élément mâle en position de purge, le mécanisme de retenue transitoire est soumis à un premier effort dû à la pression du fluide s'écoulant de l'élément mâle vers l'extérieur et à un second effort, antagoniste du premier effort, exercé par des moyens de rappel élastique et tendant à déplacer le mécanisme vers une configuration de libération de l'élément mâle, le mécanisme étant apte à passer de sa configuration de retenue de l'élément mâle à sa configuration de libération de l'élément mâle en fonction de la résultante des efforts précités.

Grâce à l'invention, le passage de la configuration de retenue à la configuration de libération de l'élément mâle est réalisé de manière automatique dès que la pression du fluide s'écoulant de l'élément mâle vers l'extérieur atteint une valeur assez faible, correspondant à un seuil de sécurité.

Selon d'autres caractéristiques avantageuses de l'invention :
- le mécanisme de retenue transitoire comporte une bague de retenue transitoire mobile axialement sous l'effet des actions antagonistes des efforts précités, apte à limiter un déplacement radial et centrifuge d'organes d'accrochage transitoire pouvant être engagés dans une gorge périphérique externe de l'élément mâle ;
- les organes d'accrochage transitoire sont des billes susceptibles de mouvements axiaux et radiaux dans des lumières formées dans le corps de l'élément femelle et allongées selon une direction parallèle à la direction d'emmanchement de l'élément mâle dans l'élément femelle ;
- les organes d'accrochage transitoire sont des griffes comportant un talon, aptes à pivoter autour d'un axe perpendiculaire à l'axe d'emmanchement de l'élément mâle dans l'élément femelle pour passer d'une configuration dans laquelle le talon est engagé dans la gorge de l'élément mâle vers une configuration dans laquelle le talon est dégagé de cette gorge, et réciproquement ;
- le fourreau de manoeuvre forme avec le corps de l'élément femelle au moins une chambre de réception du fluide s'écoulant de l'élément mâle vers l'extérieur, une partie de la bague de retenue transitoire formant une paroi mobile de cette chambre ;
- la bague de retenue transitoire comporte sur sa face interne un relief, le déplacement axial de la bague de retenue transitoire mettant en regard ce relief avec les organes d'accrochage transitoire lorsque l'élément mâle passe de sa position emmanchée à sa position de purge ;
- le relief est dégagé des organes d'accrochage transitoire par le déplacement axial de la bague de retenue transitoire lorsque la résultante des efforts précités déplace la bague vers la configuration de libération de l'élément mâle ;
- la bague de retenue transitoire est montée mobile à jeu réduit dans un espace de coulissement défini entre le fourreau de manoeuvre et le corps de l'élément femelle ;
- la bague de retenue transitoire appartient également au mécanisme de verrouillage ;
- la bague de retenue transitoire est apte, par son déplacement axial, à dégager des organes de verrouillage appartenant au mécanisme de verrouillage d'une gorge périphérique externe de l'élément mâle lorsque celui-ci passe de sa position emmanchée à sa position de purge.

Les caractéristiques et avantages de l'invention apparaîtront dans la description qui va suivre de deux modes de réalisation d'un raccord rapide selon l'invention, donnée uniquement à titre d'exemple, et faite en se référant aux dessins annexés, dans lesquels :
- la figure 1 est une coupe axiale montrant l'agencement général des éléments mâle et femelle d'un raccord conforme à l'invention en configuration écartée de ces éléments ;
- la figure 2 est une coupe analogue à la figure 1, en configuration emmanchée du raccord ;
- la figure 3 est une coupe axiale selon la ligne III-III à la figure 2 ;
- la figure 4 est une vue de côté du raccord des figures 1 à 3, dans le sens de la flèche F₄ à la figure 2, le fourreau du raccord étant représenté en coupe ;
- la figure 5 est une coupe transversale selon la ligne V-V à la figure 3 ; on y a représenté en II-II et III-III les plans de coupe des figures 2 et 3 ;
- la figure 6 est une coupe axiale analogue à la figure 3 montrant le raccord dans une configuration intermédiaire entre la configuration emmanchée et la configuration de retenue ;
- la figure 7 est une vue analogue à la figure 4 montrant le raccord dans la configuration de la figure 6 ;
- la figure 8 est une coupe axiale analogue à la figure 2 montrant le raccord dans la configuration des figures 6 et 7 ;
- la figure 9 est une coupe axiale analogue à la figure 8 montrant le raccord en configuration de retenue ;
- la figure 10 est une coupe axiale analogue à la figure 1 montrant l'élément femelle d'un raccord conforme à un deuxième mode de réalisation de l'invention dans la configuration écartée de l'élément mâle correspondant.

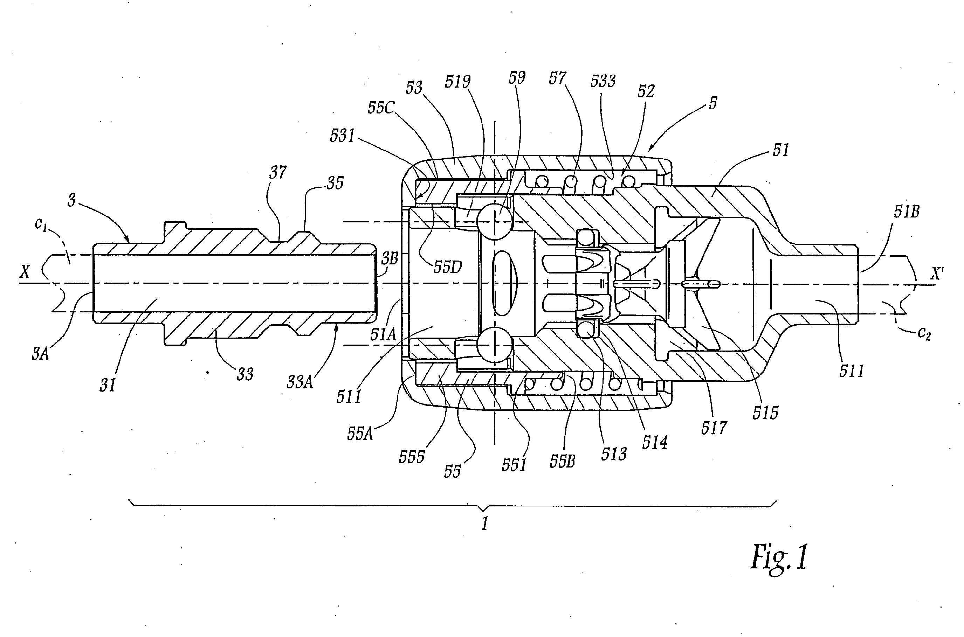

Sur la figure 1 sont schématiquement représentés les éléments d'un raccord 1 destiné à raccorder deux canalisations C₁ et C₂ parcourues par un fluide sous pression. Le raccord 1 comprend un élément mâle 3 et un élément femelle 5, tous deux de forme globalement tubulaire et complémentaires l'un de l'autre.

L'élément mâle 3 est traversé de part en part par un passage axial 31 pour le fluide sous pression et débouchant aux deux extrémités 3A et 3B de l'élément mâle 3. La canalisation C₁; située en aval du raccord 1 et schématisée en traits mixtes sur les figures, est reliée au passage 31 au niveau de l'extrémité arrière 3A de l'élément mâle 3. Au voisinage de son extrémité avant 3B, l'élément mâle 3 comporte une portion d'extrémité en forme de fiche 33, pourvue d'une collerette annulaire 35 en arrière de laquelle est formée une gorge périphérique externe 37.

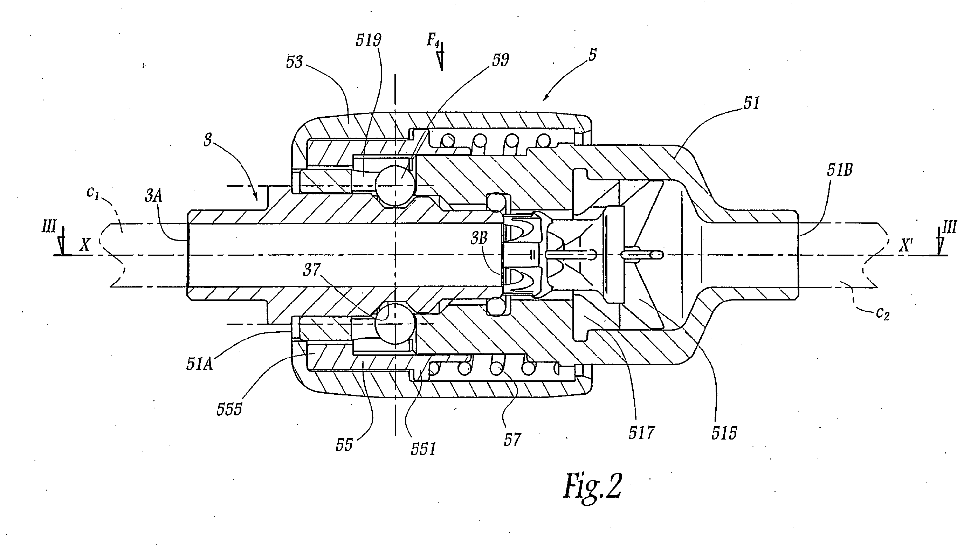

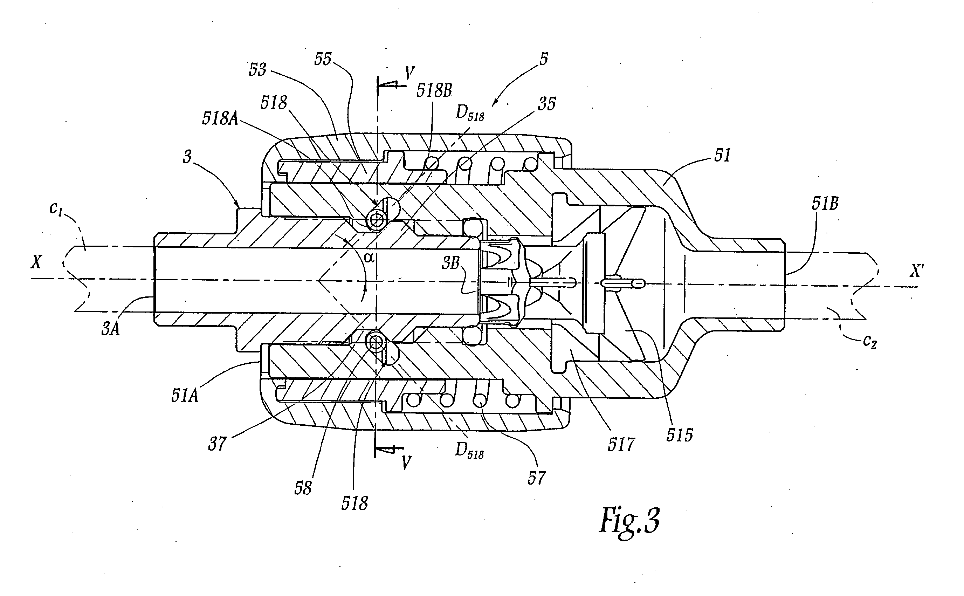

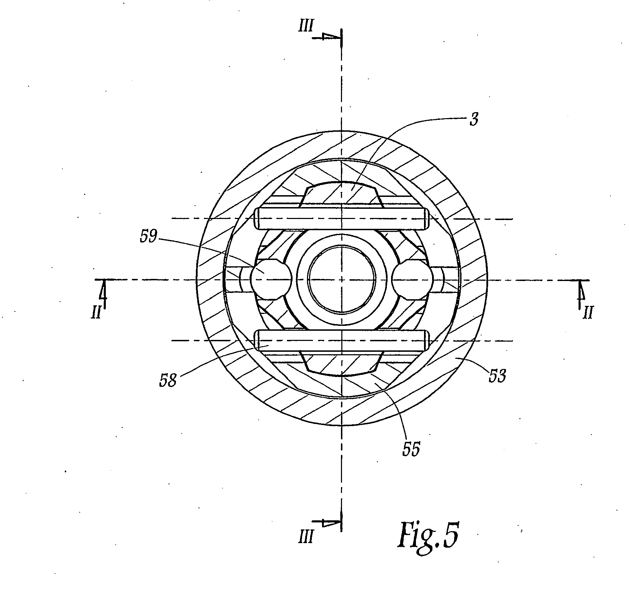

L'élément femelle 5 comprend un corps 51 traversé de part en part par un passage axial 511 centré sur un axe X-X' et débouchant aux deux extrémités 51A et 51B du corps 51. La canalisation C₂, située en amont du raccord 1 et schématisée en traits mixtes sur les figures, est reliée au passage 511 au niveau de l'extrémité arrière 51B du corps 51. Un joint torique 513, destiné à assurer l'étanchéité du raccordement des passages 31 et 511 en configuration emmanchée du raccord, est monté dans une gorge annulaire 514 ménagée dans le corps 51. Le joint 513 vient en appui contre la surface radiale externe 33A de la fiche 33 lorsque l'élément 3 est emmanché dans l'élément 5, comme montré aux figures 3 et 5. Un clapet 515 d'obturation est monté à coulissement dans le passage 511, mobile entre une position ouverte et une position fermée. Dans la position fermée visible à la figure 1, le clapet 515 est appliqué contre un siège 517 prévu dans le passage 511. Dans la position ouverte illustrée aux figures 2 et 3, le clapet 515 est à l'écart du siège 517.

L'élément femelle comprend également un fourreau de manoeuvre 53 disposé autour du corps 51 et susceptible de mouvements de translation autour de ce corps, parallèlement à l'axe X-X'. Une bague 55 est montée à coulissement dans un espace 52 délimité entre le fourreau 53 et le corps 51. La bague 55 est mobile axialement parallèlement à l'axe X-X'. Lorsque l'élément femelle 5 est dissocié de l'élément mâle 3, comme représenté à la figure 1, la face d'extrémité 55A de la bague 55 orientée vers l'extrémité 51A du corps 51 est en appui contre un épaulement interne 531 du fourreau 53. La bague 55 comporte, sur sa face externe 55C orientée vers le fourreau 53, une collerette 551 qui est soumise à l'action d'un ressort de compression 57 qui tend à la repousser vers l'extrémité 51A du corps 51 et vers l'épaulement 531. La collerette 551 est mobile dans une rainure annulaire interne 533 du fourreau 53. Sur sa face interne 55D orientée vers l'axe central X-X', la bague 55 comporte, au voisinage de sa face d'extrémité 55A, une collerette interne 555 faisant saillie vers l'axe X-X'.

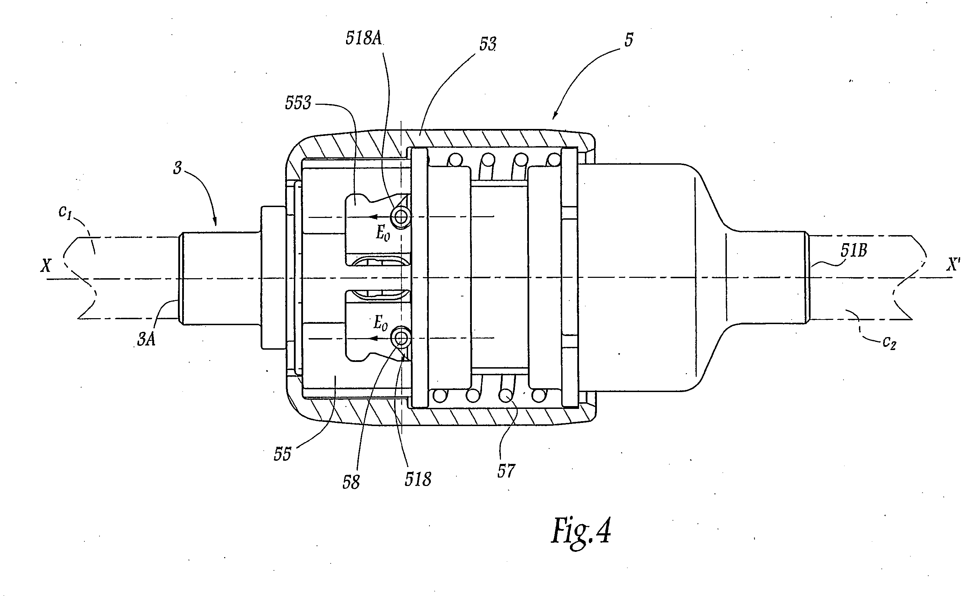

Deux aiguilles 58 sont prévues pour verrouiller l'élément mâle 3 à l'intérieur du corps 51 de l'élément femelle 5 dans la configuration emmanchée des figures 2 à 5. Les aiguilles 58 sont mobiles à l'intérieur de deux lumières oblongues 518 ménagées dans le corps 51 de l'élément femelle et inclinées par rapport à l'axe X-X'. Les lumières 518 s'étendent chacune selon une direction D₅₁₈ qui forme avec l'axe X-X' un angle α aigu, de l'ordre de 45°. Par ailleurs, deux billes 59 d'accrochage transitoire sont logées dans deux lumières oblongues 519 ménagées dans le corps 51 de l'élément femelle, parallèlement à l'axe X-X'.

Sur la figure 1, l'élément femelle 5 et l'élément mâle 3 sont dissociés. Le clapet 515 peut coulisser librement et la pression du fluide dans la canalisation amont C₂ le pousse dans sa position d'obturation. De plus, le ressort 57 pousse la bague 55 contre l'épaulement 531 du fourreau 53.

Lors de l'introduction de l'élément mâle 3 dans le corps 51, la collerette 35 repousse radialement les aiguilles 58 vers l'extrémité 518B la plus éloignée de l'axe X-X' des lumières 518, ce qui recule la bague 55 à l'encontre du ressort 57. Dans le même temps, les billes 59 sont repoussées radialement par la collerette 35 dans les lumières 519. Une fois la collerette 35 passée, les aiguilles 58 peuvent se déplacer vers l'extrémité 518A des lumières 518 la plus proche de l'axe X-X' du fait d'un effort de poussée E₀ exercé sur les aiguilles 58 par la bague 55 soumise à l'action du ressort 57. Les aiguilles 58 s'engagent alors dans la gorge 37 de l'élément mâle 3. Les aiguilles 58 sont maintenues à l'extrémité 518A des lumières 518 par la collerette 551 de la bague 55 qui exerce sur celles-ci l'effort E₀. De même, les billes 59 sont aptes à se déplacer radialement et à s'engager dans la gorge périphérique externe 37 de l'élément mâle 3 après passage de la collerette 35. On se retrouve alors dans la configuration emmanchée visible aux figures 2 à 5.

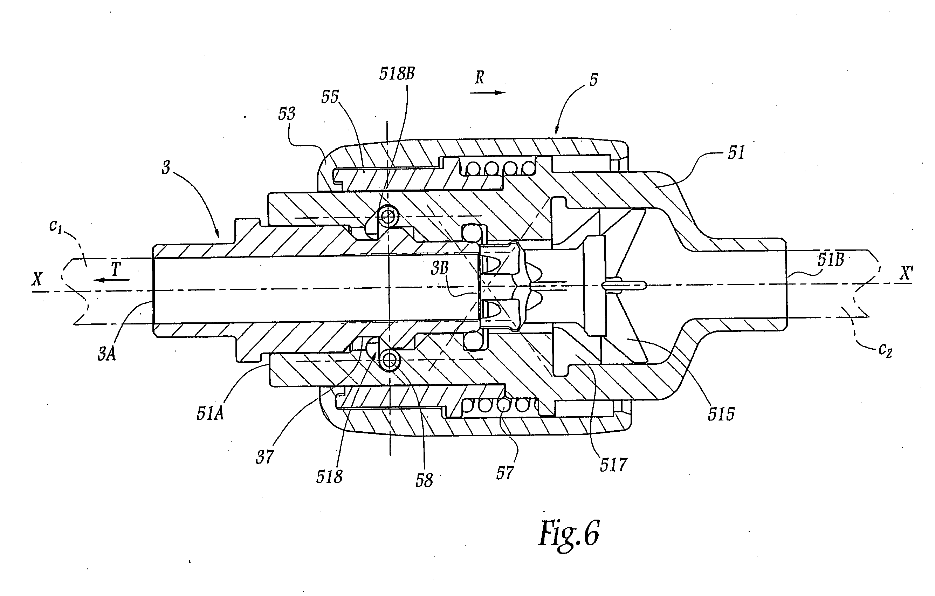

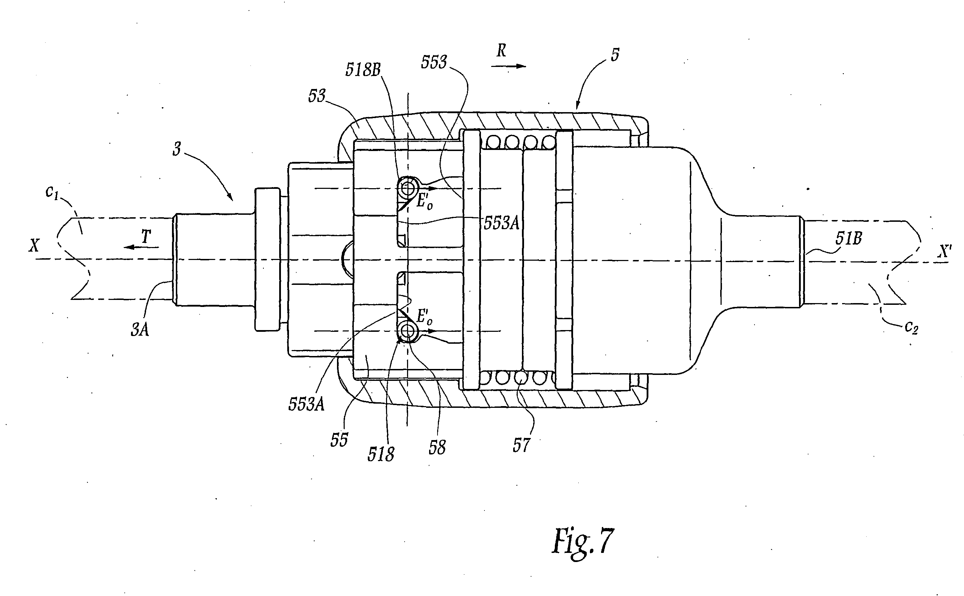

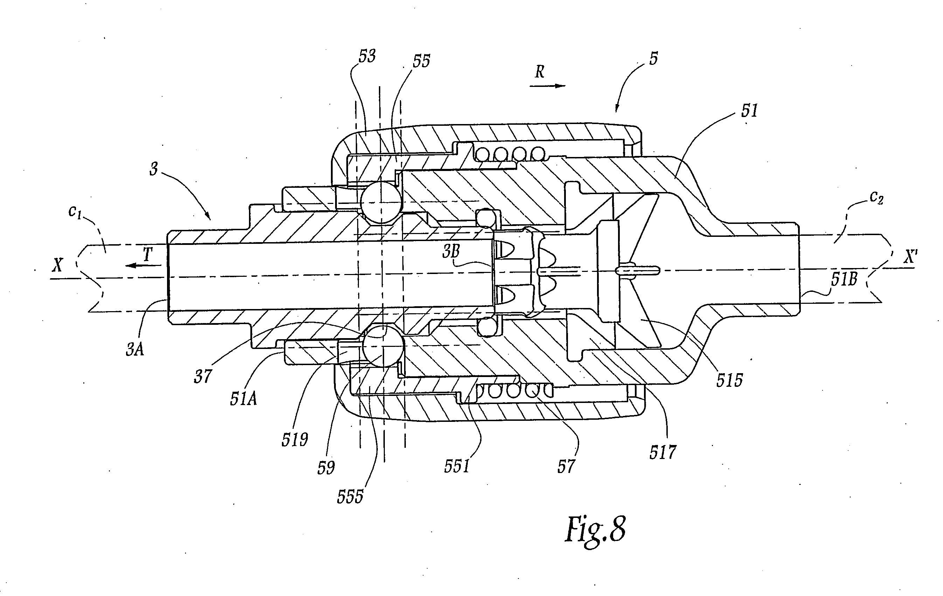

Lorsqu'il est nécessaire d'ouvrir le raccord 1, c'est-à-dire de séparer les éléments mâle et femelle 3 et 5, on déverrouille l'élément mâle 3 par rapport au corps 51 en exerçant sur le fourreau 53 un effort de recul R dirigé vers l'arrière de l'élément femelle 5, c'est-à-dire vers la canalisation C₂, comme représenté aux figures 6 à 8. Le fourreau 53 est en appui contre la bague 55 via l'épaulement 531 et la face 55A, de telle sorte que le déplacement du fourreau 53 vers la canalisation C₂ résulte dans un déplacement concomitant de la bague 55 dans le même sens. La collerette interne 555 vient alors recouvrir les billes 59 et empêcher tout mouvement radial de ces billes vers l'extérieur de la gorge 37.

La bague 55 comporte également des logements 553 dans lesquels sont engagées les aiguilles 58. Du fait du mouvement de la bague 55, les bords 553A des logements 553 repoussent les aiguilles 58 en direction de la canalisation C₂ en exerçant un effort E'₀ dirigé vers l'arrière de l'élément 5. Ceci a pour effet de pousser chacune des aiguilles 58 vers l'extrémité 518B de la lumière 518 correspondante. Compte tenu du caractère incliné des lumières 518, les aiguilles 58 sont ainsi extraites de la gorge 37, de sorte que l'élément mâle 3 peut être légèrement chassé vers l'extérieur du corps 51, avec un mouvement de translation représenté par la flèche T aux figures 6 à 8.

L'extrémité 3B de l'élément mâle 3 n'est alors plus en appui contre le clapet 515. Le clapet 515 est donc plaqué contre le siège 517 sous l'effet de la pression régnant dans la canalisation C₂.

Dans la position des figures 6 à 9, l'élément mâle 3 est retenu à l'intérieur du corps 51 par les billes 59 qui sont maintenues dans la gorge 37 par la collerette 555.

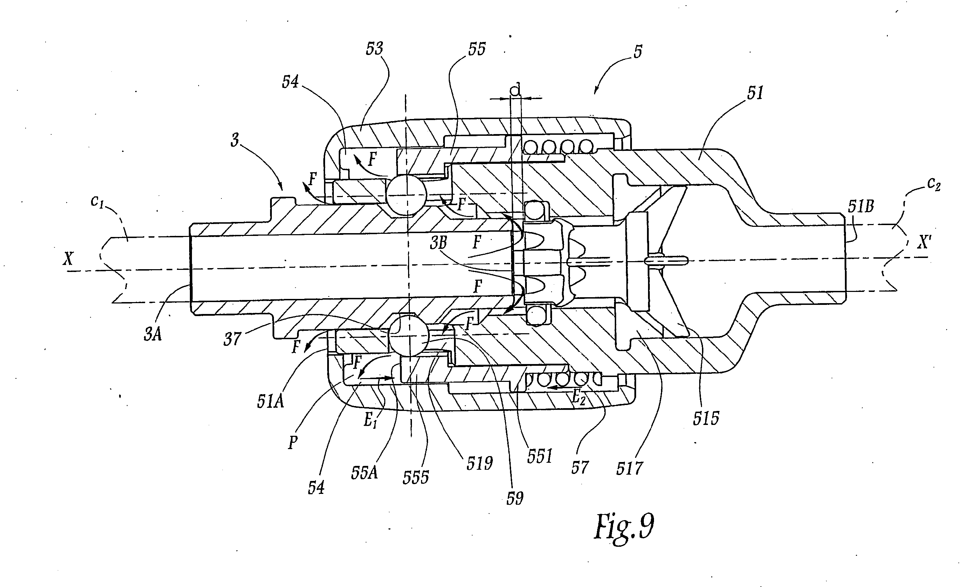

Par le passage de la configuration emmanchée des figures 2 à 5 à la configuration de retenue de la figure 9, l'élément mâle 3 est parvenu dans une position de purge du fluide compris dans la canalisation C₁ puisque l'extrémité 3B de l'élément mâle 3 est séparée du clapet 515 d'une distance d non nulle. Les flèches F à la figure 9 montrent l'écoulement du fluide de l'élément mâle 3 vers l'extérieur.

Dans la configuration de retenue de la figure 9, le fluide s'échappe de l'élément mâle 3 vers une chambre 54 de réception du fluide ménagée entre le fourreau 53 et le corps 51, l'extrémité 55A de la bague 55 formant une paroi mobile de la chambre 54. Ainsi, la bague 55 est soumise aux actions antagonistes de l'effort E₁ dû à la pression P dans la chambre 54 du fluide s'écoulant de l'élément mâle 3, tendant à déplacer la bague 55 vers l'extrémité 51B du corps 51, et de l'effort E₂ de rappel élastique du ressort 57, tendant à déplacer la bague 55 vers l'extrémité 51A du corps 51. Dans le même temps, la pression P dans la chambre 54 ramène le fourreau 53 en direction de l'extrémité 51A. Lorsque la pression P dans la chambre 54 diminue du fait de l'écoulement du fluide vers l'extérieur à travers les interstices formant les jeux nécessaires au fonctionnement du raccord, l'effort E₂ devient supérieur à l'effort E₁ et la résultante des efforts E₁ et E₂ pousse la bague 55 vers l'extrémité 51A du corps 51. De ce fait, la collerette 555 est dégagée des billes 59. Les billes 59 peuvent alors se déplacer radialement dans les lumières 519 et se dégager de la gorge 37. Lorsque les billes 59 sont extraites de la gorge 37 et puisque les aiguilles 58 sont déjà en amont de la collerette 35, rien ne s'oppose à l'extraction de l'élément mâle 3 par rapport au corps 51. On peut alors passer à la configuration dissociée de la figure 1.

Ainsi, une action unique R sur le fourreau 53 permet de dégager les aiguilles de verrouillage 58, les billes de retenue transitoire 59 étant coiffées de la bague 55 qui est maintenue dans cette position par la pression P de purge à l'encontre du ressort 57 tant que cette pression est suffisante pour que l'effort E₁ s'oppose à l'effort E₂. Quand la pression P atteint un seuil de sécurité qui dépend de la constante de raideur du ressort 57 et peut être choisi par le concepteur du raccord 1, le ressort 57 repousse la bague 55 et les billes 59 libèrent l'élément mâle 3.

Un raccord selon l'invention est donc compact, mono-impulsion, simple à utiliser et adaptable à la majorité des embouts mâles du marché. De plus, la durée de la purge s'adapte automatiquement à la quantité de fluide à évacuer, contrairement aux raccords à deux impulsions. L'invention permet donc un gain de temps et une amélioration de la sécurité.

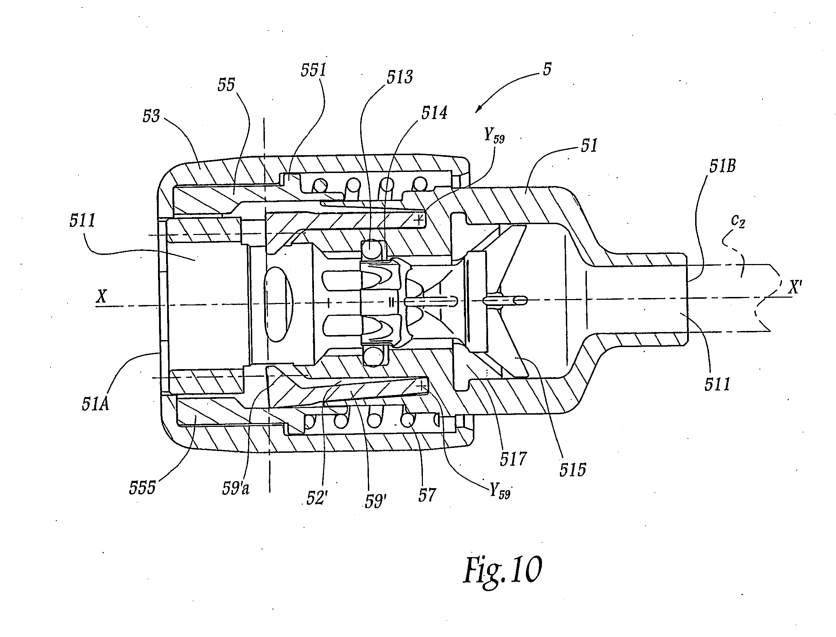

Dans le deuxième mode de réalisation représenté à la figure 10, les éléments analogues à ceux du premier mode de réalisation portent des références identiques. Les billes 59 d'accrochage temporaire sont remplacées par des griffes 59' comportant chacune un talon 59' a apte à s'engager dans la gorge périphérique externe 37 de l'élément mâle 3. Les griffes 59' sont montées, dans un renfoncement 52' du corps 51, pivotantes chacune autour d'un axe Y₅₉ perpendiculaire à l'axe X-X'. Lors du passage de la configuration emmanchée à la configuration de retenue, le déplacement axial de la bague 55 met en contact sa collerette 555 avec les talons 59'a des griffes 59'. Ainsi, tout mouvement radial des griffes 59' vers l'extérieur de la gorge 37 est empêché, ce qui maintient l'élément mâle 3 dans le corpus 51. Lorsque la pression P du fluide en cours de purge devient assez faible, le ressort 57 repousse la bague 55 vers l'extrémité. 51A du corps 51. La collerette 555 est alors décalée par rapport aux talons 59'a des griffes 59'. Les griffes 59' peuvent se déplacer radialement de manière à se désengager de la gorge 37 et à libérer l'élément mâle 3 du corps 51.

Dans les deux modes de réalisation décrits, les organes de verrouillage sont des aiguilles. Cependant, d'autres organes de verrouillage peuvent être envisagés, notamment des billes ou des griffes.

## Revendications

1. Raccord (1) rapide de sécurité pour la jonction amovible de deux canalisations amont et aval (C₁, C₂) parcourues par un fluide sous pression, ce raccord comprenant un élément mâle (3) et un élément femelle (5) aptes à s'emmancher axialement et à se verrouiller l'un à l'intérieur de l'autre, un mécanisme de verrouillage (37, 55, 58) apte à immobiliser axialement l'élément mâle dans une position de raccordement, un mécanisme de retenue transitoire (37, 55, 59 ; 59') apte à immobiliser l'élément mâle, après sa libération par le mécanisme de verrouillage, dans une position de purge de la canalisation (C₁) reliée à l'élément mâle, le mécanisme de verrouillage étant commandé par un fourreau (53) de manoeuvre coulissant autour d'un corps (51) de l'élément femelle, **caractérisé en ce que**, lorsqu'il retient l'élément mâle en position de purge, le mécanisme de retenue transitoire est soumis à un premier effort (E₁) dû à la pression (P) du fluide s'écoulant (F) de l'élément mâle vers l'extérieur et à un second effort (E₂), antagoniste du premier effort, exercé par des moyens (57) de rappel élastique et tendant à déplacer ledit mécanisme vers une configuration de libération de l'élément mâle, ledit mécanisme étant apte à passer de sa configuration de retenue de l'élément mâle à sa configuration de libération de l'élément mâle en fonction de la résultante desdits efforts (E₁, E₂).

2. Raccord rapide selon la revendication 1, **caractérisé en ce que** ledit mécanisme de retenue transitoire comporte une bague (55) de retenue transitoire mobile axialement sous l'effet des actions antagonistes desdits efforts (E₁, E₂), apte à limiter un déplacement radial et centrifuge d'organes (59, 59') d'accrochage transitoire pouvant être engagés dans une gorge périphérique externe (37) de l'élément mâle (3).

3. Raccord rapide selon la revendication 2, **caractérisé en ce que** lesdits organes d'accrochage transitoire sont des billes (59) susceptibles de mouvements axiaux et radiaux dans des lumières (519) formées dans le corps (51) de l'élément femelle (5) et allongées selon une direction parallèle à la direction d'emmanchement (X-X') de l'élément mâle (3) dans l'élément femelle.

4. Raccord rapide selon la revendication 2, **caractérisé en ce que** lesdits organes d'accrochage transitoire sont des griffes (59') comportant un talon (59'a), aptes à pivoter autour d'un axe (Y₅₉) perpendiculaire à l'axe d'emmanchement (X-X') de l'élément mâle (3) dans l'élément femelle (5) pour passer d'une configuration dans laquelle ledit talon est engagé dans ladite gorge (37) de l'élément mâle vers une configuration dans laquelle ledit talon est dégagé de ladite gorge, et réciproquement.

5. Raccord rapide selon l'une quelconque des revendications 2 à 4, **caractérisé en ce que** ledit fourreau (53) de manoeuvre forme avec ledit corps (51) de l'élément femelle (5) au moins une chambre (54) de réception du fluide s'écoulant de l'élément mâle (3) vers l'extérieur, une partie (55A) de la bague (55) de retenue transitoire formant une paroi mobile de ladite chambre.

6. Raccord rapide selon l'une quelconque des revendications 2 à 5, **caractérisé en ce que** ladite bague (55) de retenue transitoire comporte sur sa face interne (55D) un relief (555), le déplacement axial de ladite bague de retenue transitoire mettant en regard ledit relief avec lesdits organes (59, 59') d'accrochage transitoire lorsque l'élément mâle (3) passe de sa position emmanchée à sa position de purge.

7. Raccord rapide selon la revendication 6, **caractérisé en ce que** ledit relief (555) est dégagé desdits organes (59, 59') d'accrochage transitoire par le déplacement axial de ladite bague (55) de retenue transitoire lorsque la résultante desdits efforts (E₁, E₂) déplace ladite bague vers la configuration de libération dudit élément mâle (3).

8. Raccord rapide selon l'une quelconque des revendications 2 à 7, **caractérisé en ce que** ladite bague (55) de retenue transitoire est montée mobile à jeu réduit dans un espace de coulissement (52) défini entre ledit fourreau (53) de manoeuvre et ledit corps (51) de l'élément femelle (5).

9. Raccord rapide selon l'une quelconque des revendications 2 à 7, **caractérisé en ce que** ladite bague (55) de retenue transitoire appartient également audit mécanisme de verrouillage (37, 55, 58).

10. Raccord rapide selon la revendication 8, **caractérisé en ce que** ladite bague (55) de retenue transitoire est apte, par son déplacement axial, à dégager (E'₀) des organes (58) de verrouillage appartenant audit mécanisme de verrouillage (37, 55, 58) d'une gorge périphérique externe (37) de l'élément mâle (3) lorsque celui-ci passe de sa position emmanchée à sa position de purge.

## Claims

1. Quick-action safety coupling (1) for the removable connection of two lines (C₁, C₂), namely an upstream line and a downstream line, through which a pressurized fluid flows, this coupling comprising a male element (3) and a female element (5) that are able to mate axially and be locked together, one inside the other, a locking mechanism (37, 55, 58) capable of axially immobilizing the male element in a coupled position, a transient retention mechanism (37, 55, 59; 59') capable of immobilizing the male element, when it is released by the locking mechanism, in a position for purging the line (C₁) connected to the male element, the locking mechanism being controlled by an operating sleeve (53) sliding along a body (51) of the female element, **characterized in that** when it retains the male element in the purge position, the transient retention mechanism is subjected to a first force (E₁) due to the pressure (P) of the fluid (F) flowing from the male element to the outside and to a second force (E₂), opposing the first force, exerted by elastic return means (57) and tending to displace said mechanism towards a release configuration for releasing the male element, said mechanism being capable of passing from its retention configuration for retaining the male element to its release configuration for releasing the male element depending on the resultant of said forces (E₁, E₂).

2. Quick-action coupling according to Claim 1, **characterized in that** said transient retention mechanism comprises a transient retention ring (55) that can move axially under the effect of the opposing actions of said forces (E₁, E₂), which is capable of limiting a radial and centrifugal displacement of transient latching members (59, 59') that can be engaged in an external peripheral groove (37) of the male element (3).

3. Quick-action coupling according to Claim 2, **characterized in that** said transient latching members are balls (59) capable of axial and radial movements in slots (519) formed in the body (51) of the female element (5), said slots being elongate in a direction parallel to the direction of mating (X-X') of the male element (3) in the female element.

4. Quick-action coupling according to Claim 2, **characterized in that** said transient latching members are claws (59') having a lug (59'a), which are capable of pivoting about an axis (Y₅₉) perpendicular to the axis of mating (X-X') of the male element (3) in the female element (5) in order to pass from a configuration in which said lug is engaged in said groove (37) of the male element to a configuration in which said lug is disengaged from said groove, and vice versa.

5. Quick-action coupling according to any one of Claims 2 to 4, **characterized in that** said operating sleeve (53) forms with said body (51) of the female element (5) at least one chamber (54) for receiving the fluid flowing from the male element (3) to the outside, a part (55A) of the transient retention ring (55) forming a movable wall of said chamber.

6. Quick-action coupling according to any one of Claims 2 to 5, **characterized in that** said transient retention ring (55) includes, on its internal face (55D), a relief (555), the axial displacement of said transient retention ring bringing said relief opposite said transient latching members (59, 59') when the male element (3) passes from its mated position to its purge position.

7. Quick-action coupling according to Claim 6, **characterized in that** said relief (555) is disengaged from said transient latching members (59, 59') by the axial displacement of said transient retention ring (55) when the resultant of said forces (E₁, E₂) displaces said ring towards the release configuration for releasing said male element (3).

8. Quick-action coupling according to any one of Claims 2 to 7, **characterized in that** said transient retention ring (55) is mounted so as to move with a slight clearance in a sliding space (52) defined between said operating sleeve (53) and said body (51) of the female element (5).

9. Quick-action coupling according to any one of Claims 2 to 7, **characterized in that** said transient retention ring (55) also belongs to said locking mechanism (37, 55, 58).

10. Quick-action coupling according to Claim 8, **characterized in that** said transient retention ring (55) is capable, by its axial displacement, of disengaging (E'₀) locking members (58) belonging to said locking mechanism (37, 55, 58) from an external peripheral groove (37) of the male element (3) when the latter passes from its mated position to its purge position.

## Patentansprüche

1. Sicherheitsschnellkupplung (1) für die lösbare Verbindung einer stromaufwärts gelegenen Leitung (C₁) mit einer stromabwärst gelegenen Leitung (C₂), die von einem unter Druck stehendem Fluid durchströmt werden, wobei diese Kupplung ein Einsteckelement (3) und ein Aufnahmeelement (5), die geeignet sind, axial ineinander zu greifen und sich, das eine in dem anderen, zu verriegeln, einen Verriegelungsmechanismus (37, 55, 58), der geeignet ist, axial das Einsteckelement (3) in einer Verbindungsstellung festzulegen, einen Übergangshaltemechanismus (37, 55, 59; 59') umfasst, der geeignet ist, das Einsteckelement nach seiner Freigabe durch den verriegelungsmechanismus in einer Entleerungsstellung der mit dem Einsteckelement verbundenen Leitung (C₁) festzulegen, wobei der Verriegelungsmechanismus von einer Betätigungshülse (53) gesteuert wird, die um den Körper (51) des Aufnahmeelementes gleitet, **dadurch gekennzeichnet, dass** wenn er das Einsteckelement in seiner Entleerungsstellung hält, der Übergangshaltemechanismus einer ersten Kraft (E₁), bedingt durch den Druck (P) des von dem Einsteckelement nach außen strömenden Fluids (F), und einer zweiten zur ersten Kraft entgegenwirkenden Kraft (E₂) unterworfen wird,
die durch Mittel (57) zur elastischen Rückstellung ausgeübt wird und dazu neigt, den genannten Mechanismus in eine Konfiguration der Freigabe des Einsteckelementes zu bewegen, wobei der genannte Mechanismus geeignet ist, von seiner Konfiguration des Haltens des Einsteckelementes in seine Konfiguration der Freigabe des Einsteckelementes abhängig von der Resultierenden der Kräfte (E₁, E₂) überzugehen.

2. Sicherheitsschnellkupplung nach Anspruch 1, **dadurch gekennzeichnet, dass** der Übergangshaltemechanismus einen Ring (55) zum übergangsweisen Halten umfasst, der unter der Wirkung der entgegenwirkenden Ausübung der Kräfte (E₁, E₂) axial beweglich und geeignet ist, eine radiale und zentrifugale Bewegung von Übergangsrastorganen (59, 59') zu begrenzen, die in eine äußere Umfangsnut (37) des Einsteckelementes (3) eingreifen können.

3. Sicherheitsschnellkupplung nach Anspruch 2, **dadurch gekennzeichnet, dass** die Übergangsrastorgane Kugeln (59) sind, die zur axialen und radialen Bewegung in Öffnungen (519) geeignet sind, die in dem Körper (51) des Aufnahmeelementes (5) gebildet sind und gemäß einer Richtung parallel zur Richtung des Ineinandergreifens (X-X') des Einsteckelementes (3) in das Aufnahmeelement verlängert sind.

4. Sicherheitsschnellkupplung nach Anspruch 2, **dadurch gekennzeichnet, dass** die Übergangsrastorgane Krallen (59') mit einem Absatz (59'a) sind, der geeignet ist, um eine Achse (Y₅₉) senkrecht zur Richtung des Ineinandergreifens (X-X') des Einsteckelementes (3) in das Aufnahmeelement (5) zu schwenken, um von einer Konfiguration, in der der Absatz in die Nut (37) der Einsteckelementes eingreift, in eine Konfiguration, in der der Absatz aus der Nut freigesetzt ist, zu kommen und umgekehrt.

5. Sicherheitsschnellkupplung nach einem beliebigen der Ansprüche 2 bis 4, **dadurch gekennzeichnet, dass** die Betätigungshülse (53) mit dem Körper (51) des Aufnahmeelementes (5) mindestens eine Kammer (54) zur Aufnahme des Fluids bildet, das aus den Einsteckelement(3) nach außen strömt, wobei ein Teil (55A) des Übergangshalteringes (55) eine bewegliche Wand der Kammer bildet.

6. Sicherheitsschnellkupplung nach einem beliebigen der Ansprüche 2 bis 5, **dadurch gekennzeichnet, dass** der Übergangshaltering (55) auf seiner Innenfläche (55D) ein Relief (555) aufweist, wobei die axiale Bewegung des Übergangshalteringes das Relief mit den Übergangsrastorganen (59, 59') in Gegenüberstellung bringt, wenn das Einsteckelement (3) von seiner eingesteckten Stellung in seine Entleerungsstellung gebracht wird.

7. Sicherheitsschnellkupplung nach Anspruch 6, **dadurch gekennzeichnet, dass** das Relief (555) durch die axiale Bewegung des Übergangshalteringes (55) von den Übergangsrastelementen (59, 59') freigesetzt wird, wenn die Resultierende der Kräfte (E₁, E₂) den Ring in eine Stellung der Freigabe des Einsteckelementes (3) bewegt.

8. Sicherheitsschnellkupplung nach einem beliebigen der Ansprüche 2 bis 7, **dadurch gekennzeichnet, dass** der Übergangshaltering (55) beweglich mit reduziertem Spiel in einem Gleitraum (52) montiert ist, der zwischen der Betätigungshülse (53) und dem Körper (51) des Aufnahmeelementes (5) begrenzt ist.

9. Sicherheitsschnellkupplung nach einem beliebigen der Ansprüche 2 bis 7, **dadurch gekennzeichnet, dass** der Übergangshaltering (55) gleichfalles zu dem Verriegelungsmechanismus (37, 55, 58) gehört.

10. Sicherheitsschnellkupplung nach Anspruch 8, **dadurch gekennzeichnet, dass** der Übergangshaltering (55) durch seine axiale Bewegung in der Lage ist, zu dem Verriegelungsmechanismus (37, 55, 58) gehörende Verriegelungsorgane (58) von einer äußeren Umfangsnut (37) des Einsteckelementes (3) freizusetzen (E'₀), wenn es von seiner eingesteckten Stellung in seine Entleerungsstellung übergeht.
